# EUROPÄISCHE PATENTSCHRIFT

(11) **EP 1 780 423 B1**
(45) Veröffentlichungstag und Bekanntmachung des Hinweises auf die Patenterteilung: **20.01.2010**
(21) Anmeldenummer: 05023614.0
(22) Anmeldetag: 28.10.2005
(51) Int. Cl.: F16B 2/16, B62D 1/16, B62D 1/184

(54) **Vorrichtung zum Festhalten zweier beweglicher Teile einer Lenksäule**
Fixing device for two moveable parts of a steering column
Dispositif de fixation pour deux parties mobiles d'une colonne de direction

(43) Veröffentlichungstag der Anmeldung: 02.05.2007
(73) Patentinhaber: ThyssenKrupp Presta Aktiengesellschaft, 9492 Eschen (LI)
(72) Erfinder: Battlogg, Stefan, Ing., 6771 St. Anton i.M. (AT)
(74) Vertreter: Adams, Steffen

(56) Entgegenhaltungen:
- DE-A1- 1 575 318
- DE-C- 850 103
- FR-A- 2 701 911
- GB-A- 167 637
- GB-A- 1 171 150

## Beschreibung

Die Erfindung betrifft eine Vorrichtung zum Festhalten zweier zueinander relativ beweglicher Teile mittels mindestens eines Halteelementes, das dem ersten Teil zugeordnet ist und quer zur Bewegungsrichtung der beiden Teile in den zweiten Teil eingreift.

Zum formschlüssigen Fixieren zweier zueinander beweglicher Teile werden üblicherweise Befestigungselemente in korrespondierende Bohrungen eingesetzt und dort gesichert. Wenn die Verbindungen wieder lösbar sein sollen, so werden geeignete Befestigungselemente gewählt, beispielsweise Schrauben, die aus einer Gewindebohrung wieder herausgedreht werden können, bzw. von denen eine Schraubenmutter wieder abnehmbar ist. Komplizierter wird die Befestigung, wenn die beiden Teile in unterschiedlichen Positionen fixiert werden sollen, und insbesondere dann, wenn zumindest eine quasi-stufenlose Auswahl von Befestigungspositionen möglich werden soll. Für die Befestigung in unterschiedlichen Positionen ist zumindest eine weitere Bohrung od. dgl. erforderlich, und das Befestigungselement kann dann wahlweise in eine der Bohrungen eingesetzt werden. Liegen die gewünschten Positionen zu knapp aneinander, sind unter Umständen eine größere Anzahl von Bohrungen erforderlich, die unterschiedliche Abstände aufweisen und beispielsweise in Reihen nebeneinander vorgesehen sind.

Eine Möglichkeit für eine Festlegung zweier Teile in beliebigen Positionen zeigt die DE 850103. Hier weist der eine Teil zwei oder drei Schrauben mit einem spitzen Ende auf, und der andere Teil ist sägeblattähnlich mit Zähnen versehen, deren Flanken dieselbe Neigung wie die Spitzen der Schrauben aufweisen. Der Abstand zwischen den Schrauben entspricht nicht dem der Zähne, sodass immer die Schrauben so gesetzt werden können, dass sie an einer linken und einer rechten Zahnflanke anliegen. Dabei dringen sie meist unterschiedlich tief zwischen die Zähne ein.

Eine weitere zur Festlegung der Position zweier Teile zueinander ist in der deutschen Patentschrift DE 111 79 46 beschrieben. Darin ist eine Schnellspann- und Schnellkupplungsvorrichtung offenbart, die zum Gegeneinanderklemmen eines Werkstücks und einer Werkstückaufnahme dient. Über ein Spannelement wird eine Spannkraft auf Wälzkörper übertragen, die in zickzackförmiger Anordnung in einem Kanal oder Käfig vorgesehen sind. Über die Wälzkörper, die als Walzen ausgebildet sind, wird dann die Klemmkraft auf das Werkstück übertragen, so dass es mit der Werkstückaufnahme geklemmt gehalten ist.

Die Erfindung schlägt nun eine Vorrichtung der eingangs genannten Art vor, bei der das erste Teil fest mit der Karosserie eines Kraftfahrzeugs und das zweite Teil fest mit einer verstellbaren Lenksäule des Kraftfahrzeugs verbunden ist, wobei das zweite Teil zumindest einen mit körnigem, vorzugsweise kugeligem Material gefüllten Behälter umfasst, und das Halteelement in das Material eingebettet ist. Auf diese Weise wird an jeder beliebigen Stelle innerhalb der durch die Behälteröffnung definierten Länge und Breite ein fester Halt zwischen den beiden Teilen erzielt.

Die Größe der vom Halteelement aufnehmbaren Kräfte hängt dabei von der Reibung zwischen den Materialkörnern ab. Kantig-körniges Material bietet einen festeren Halt als kugelig-körniges Material. Die Füllungstiefe, d.h. die Anzahl der Materialschichten, sowie die durch die Querschnittsform des Halteelementes bedingte, gegen eine Querverschiebung wirkende Fläche stellen ebenfalls wesentliche Kriterien dar. Weiters spielen auch die Größenverhältnisse eine Rolle, d.h. die Korngröße bzw. der Durchmesser der Materialteilchen in Bezug auf Länge und Breite des Behälters.

Das körnige Material kann in den Behälter leicht eingefüllt werden. Eine Abdeckung des gefüllten Behälters ist nicht notwendig, wenn nur geringe Kräfte aufzunehmen sind, und die Behälteröffnung horizontal liegt. Bevorzugt ist aber eine Abdeckung vorgesehen, beispielsweise in Form einer einen verschiebbaren Deckel für den Behälter bildenden Platte, die dem ersten der beiden zueinander festzuhaltenden Teile zugeordnet ist, und von der das Halteelement absteht. Die Platte kann dabei eben oder in eine oder beide Richtungen gewölbt sein, d.h. eine Zylindermantel- bzw. Kugelfläche, darstellen. Die Abdeckung und der Behälter sind, gegebenenfalls auch dichtend, einander berührend geführt. Das Halteelement kann von der Platte senkrecht oder auch schräg abstehen, und beispielsweise einen kreuz- oder sternförmigen Querschnitt aufweisen. Falls die Verschiebbarkeit der beiden Teile nur in einer Richtung unterbunden sein soll, kann der Querschnitt auch ein flaches Rechteck darstellen. Selbsfirerständlich sind auch andere Querschnittsformen geeignet.

Einen wesentlichen Vorteil bietet die erfindungsgemäße Festhaltevorrichtung als Teil einer Verstelleinrichtung, die einfach lösbar und wieder fixierbar ist. Für diesen Fall ist bevorzugt vorgesehen, dass das Halteelement im ersten Teil quer zur Bewegungsrichtung der beiden Teile verschiebbar gelagert und aus dem Material zurückziehbar ist. Soll ein Bau- Konstruktions-, Maschinenteil, od. dgl. verstellt werden, wird das Halteelement aus dem körnigen Material herausgezogen, der Teil entsprechend längs oder quer verschoben, bzw. verdreht und dann das Halteelement wieder in das körnige Material eingeschoben.

Für diese Ausführung ist es von Vorteil, wenn das im Material eingebettete Ende des Halteelementes in eine Spitze oder keilförmig ausläuft. Das Halteelement kann dabei im ersten Teil auch drehbar gelagert sein, sodass eine einfache händische Betätigung möglich ist. Das Halteelement kann beispielsweise einen korkenzieherartig gewendelten Abschnitt aufweisen, der sich durch Drehung in das Material hinein- bzw. aus diesem herausschraubt. Eine weitere Möglichkeit sieht vor, dass das Halteelement zweiteilig ist, wobei die Drehung an einem Haltegriff über ein Gewinde die Axialverschiebung des in das Material im Behälter eingreifenden Abschnitts bewirkt.

Die Anwendungsmöglichkeiten der erfindungsgemäßen, äußerst einfachen, Festhaltevorrichtung sind sehr groß, wobei vor allem die beliebig wählbare Festhalteposition innerhalb des durch die Behältergröße vorgegebenen Feldes von Bedeutung sind. Der erste und der zweite Teil sind je nach den Gegebenheiten auch vertauschbar, sodass das Halteelement auch dem verschieb- oder drehbaren Teil und der Behälter mit dem körnigen Material dem feststehenden Teil zugeordnet sein können.

Mathematisch betrachtet bildet das Behältervolumen die Summe aus dem Volumen des vom eingefüllten Materials benötigten Raumes und dem Volumen des eingebetteten Halteelements, in diesem Fall liegt ein exakter Formschluss vor. Für die praktische Ausführung ist das Volumen des Materials geringfügig kleiner, um sicherzustellen, dass das Einschieben des Halteelements an jeder beliebigen Stelle ohne größeren Kraftaufwand möglich ist. Da die Materialteilchen verdrängt werden, wird die Aufnahmeöffnung für das Haltelement jedes Mal neu gebildet.

Zur Aufnahme hoher Kräfte kann die Anzahl der Halteelemente vergrößert werden, wobei mehrere Halteelemente in denselben Behälter eingreifen können, bzw. bei größeren benötigten Abständen zwischen den Halteelementen auch weitere Behälter vorgesehen werden können.

Nachstehend wird nun die Erfindung an Hand einer Festhaltevorrichtung für eine in der Länge und in der Neigung verstellbare Lenksäule eines Kraftfahrzeuges beschrieben, ohne darauf beschränkt zu sein.

Es zeigen:
- Fig. 1: eine Lenksäule mit erfindungsgemäßer Festhaltevorrichtung in Schrägansicht,
- Fig. 2: eine Lenksäule in Seitenansicht mit der Festhaltevorrichtung im Längsschnitt,
- Fig. 3: einen Schnitt nach der Linie III-III der Fig. 1, und
- Fig. 4: ebenfalls einen Schnitt nach der Linie III-III in herausgezogener Stellung des Halteelementes.

Eine Lenksäule 10 eines Kraftfahrzeugs weist zwei teleskopisch ineinander schiebbare Rohrstücke 12, 14 auf, und ist um eine Querachse 15 in der Neigung verstellbar. Das mit einem Lenkrad 11 verbundene Rohrstück 12 ist in einer am Rohrstück 12 axial fixierten Schelle 13 drehbar gelagert, die weiters an einem Behälter 7 befestigt ist. Wenn das Rohrstück 12 der Lenksäule 10 entlang seiner Achse 9 auf dem Rohrstück 14 verschoben wird, bewegt sich daher der Behälter 7 mit. Der Behälter 7, das Rohrstück 12 und das Lenkrad 11 bilden somit einen gemeinsam relativ zu einem durch die Karosserie gebildeten ersten Teil 1 verschieb- und verschwenkbaren zweiten Teil 2, um die Position des Lenkrades 11 an unterschiedlich große Fahrer anpassen zu können.

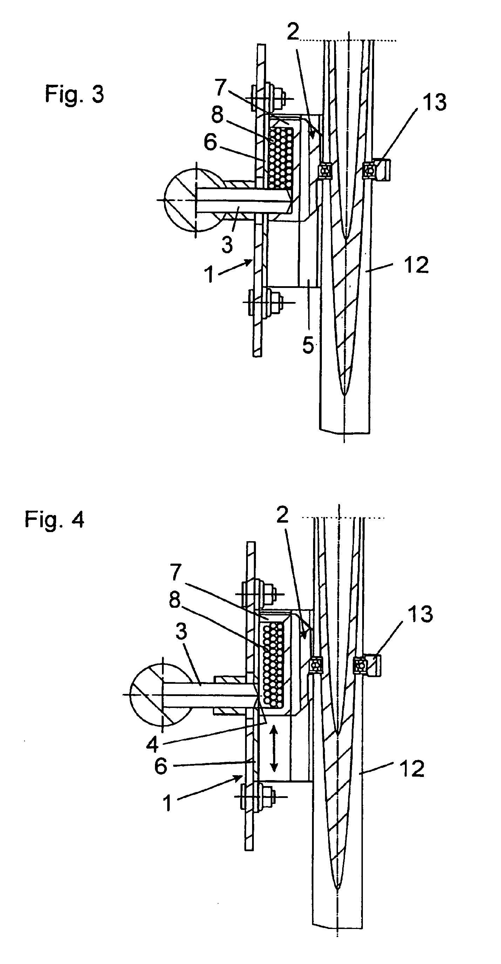

Die beiden relativ zueinander verstellbaren Teile 1, 2, im vorliegenden Fall also die Karosserie und die Lenksäule 10, sind erfindungsgemäß durch mindestens ein Halteelement 3 in der gewählten Position gegen Verschieben gesichert, wobei das Halteelement 3 dem ersten Teil 1, also der Karosserie zugeordnet ist, und in den zweiten Teil 2 quer zu dessen Bewegungsrichtungen zumindest im Wesentlichen formschlüssig eingreift. Für die Verstellung der Lenksäule 10 kann das Halteelement 3 aus dem zweiten Teil 2 herausgezogen (Fig. 3) und in der neuen Position der Lenksäule 10 wieder in den Teil 2 eingeführt werden (Fig. 4).

Der oben erwähnte Behälter 7 enthält körniges Material 8, das insbesondere durch Stahlkugeln od. dgl. gebildet ist, wie sie beispielsweise für Kugellager verwendet werden.

Der Behälter 7 enthält etwa so viel Material 8, dass die Differenz auf das maximale Behältervolumen etwa dem Volumen des eingebetteten Abschnitts des Halteelementes 3 entspricht (Fig. 3). In dieser Position ist die Bewegung des Lenkrads 11 weder in Richtung der Achse 9 noch die Änderung der Neigung der Lenksäule 10 möglich, da die Materialteilchen nicht verdrängt werden können.

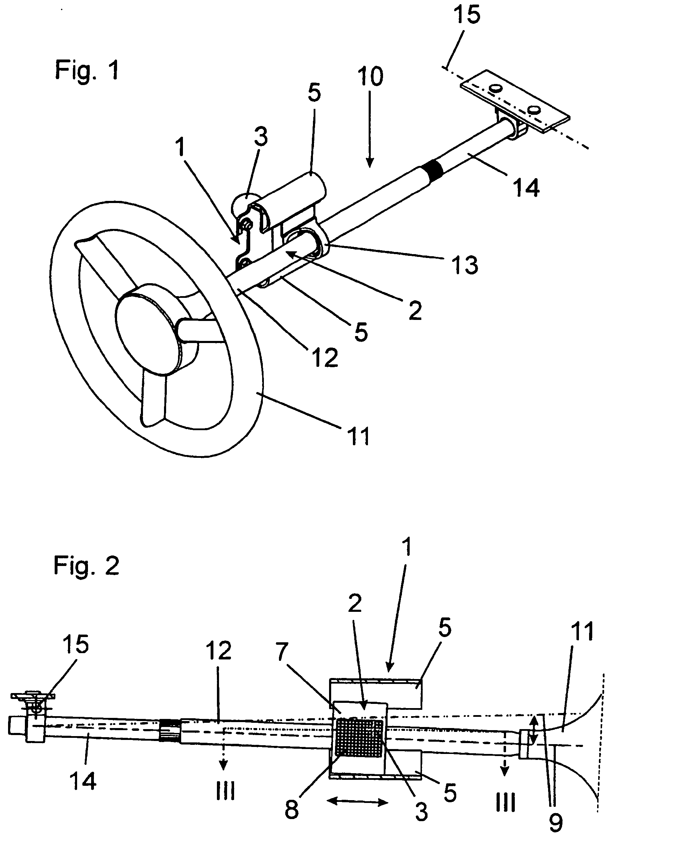

Der karosseriefeste Teil 1 umfasst eine Platte 6, die die offene Seite des Behälters 7 in Art eines verschiebbaren Deckels abdeckt und den Behälter 7 umgreifende Randstreifen 5 aufweist. Wenn das Halteelement 3, das beispielsweise einen kreuzförmigen Querschnitt aufweist (Fig. 2), gemäß Fig. 4 außer Eingriff mit dem Material 8 im Behälter 7 ist, kann das Rohrstück 12 mit dem Lenkrad 11 verschoben bzw. die Lenksäule um die Querachse 15 verschwenkt werden. Um das Eindrücken des Halteelementes 3 in der neuen Position zu erleichtern, ist das freie Ende mit einer Spitze 4 versehen.

Die erfindungsgemäße Vorrichtung lässt sich zur zweidimensionalen Festlegung beliebiger Bauteile anwenden, die nicht alle aufgezählt werden können. Insbesondere stellt sie überall dort eine einfache Konstruktion dar, wo zwischen mehreren Grundpositionen
gewählt werden soll, zwischen denen insbesondere nur gelegentlich verstellt werden soll, bzw. eine Feinjustierung ermöglicht werden soll. Sie ist ebenso für die Sitzverstellung von Kraftfahrzeugsitzen, für eine Höhenverstellung von Möbelfüßen, usw. einsetzbar.

## Patentansprüche

1. Vorrichtung zum Festhalten zweier zueinander retativ beweglicher Teile (1, 2) mittels mindestens eines Halteelementes (3), das dem ersten Teil (1) zugeordnet ist und quer zur Bewegungsrichtung der beiden Teile (1, 2) in den zweiten Teil (2) eingreift, **dadurch gekennzeichnet, dass** das erste Teil (1) fest mit der Karosserie eines Kraftfahrzeugs und der zweite Teil (2) fest mit einer verstellbaren Lenksäule des Kraftfahrzeuges verbunden ist, und dass der zweite Teil (2) zumindest einen mit körnigem, vorzugsweise kugeligem Material (8) gefüllten Behälter (7) umfasst, und das Halteelement (3) in das Material (8) eingebettet ist.

2. Vorrichtung nach Anspruch 1, **dadurch gekennzeichnet, dass** das Halteelement (3) von einer einen verschiebbaren Deckel für den Behälter (7) bildenden Platte (6) des ersten Teiles (1) absteht.

3. Vorrichtung nach Anspruch 1 oder 2, **dadurch gekennzeichnet, dass** das Halteelement (3) im ersten Teil (1) quer zur Bewegungsrichtung der beiden Teile (1, 2) verschiebbar gelagert und aus dem Material (8) zurückziehbar ist.

4. Vorrichtung nach einem der Ansprüche 1 bis 3, **dadurch gekennzeichnet, dass** das Halteelement (3) im ersten Teil drehbar gelagert ist.

5. Vorrichtung nach einem der Ansprüche 1 bis 4, **dadurch gekennzeichnet, dass** der Querschnitt des Halteelementes (3) stern- oder kreuzförmig ist.

6. Vorrichtung nach einem der Ansprüche 1 bis 5, **dadurch gekennzeichnet, dass** das im Material (8) eingebettete Ende des Halteelementes (3) in eine Spitze ausläuft.

7. Vorrichtung nach Anspruch 1, **dadurch gekennzeichnet, dass** an der verstellbaren Lenksäule ein mit Kugeln od. dgl. gefüllter Behälter (7) und an der Karosserie ein stiftartiges Haltelement (3) in seiner Längsrichtung verstellbar gelagert ist, das zwischen die Kugeln od. dgl. eingeschoben ist.

## Claims

1. Device for securing two parts (1, 2), which can move relative to each other, by means of at least one holding element (3) which is allocated to the first part (1) and engages into the second part (2) transverse to the direction of movement of the two parts (1, 2), **characterised in that** the first part (1) is fixedly connected to the body of a motor vehicle and the second part (2) is fixedly connected to an adjustable steering column of the motor vehicle, and **in that** the second part (2) includes at least one container (7) filled with granular, preferably spherical, material (8), and the holding element (3) is embedded in the material (8).

2. Device as claimed in Claim 1, **characterised in that** the holding element (3) protrudes from a plate (6) of the first part (1) forming a displaceable cover for the container (7).

3. Device as claimed in Claim 1 or 2, **characterised in that** the holding element (3) is mounted in the first part (1) so as to be displaceable transversely with respect to the direction of movement of the two parts (1,2) and can be retracted from the material (8).

4. Device as claimed in any one of Claims 1 to 3, **characterised in that** the holding element (3) is mounted in the first part so as to be rotatable.

5. Device as claimed in any one of Claims 1 to 4, **characterised in that** the cross-section of the holding element (3) is star-shaped or cruciform.

6. Device as claimed in any one of Claims I to 5, **characterised in that** the end of the holding element (3) embedded in the material (8) tapers into a tip.

7. Device as claimed in Claim 1, **characterised in that** a container (7) filled with balls or the like is mounted on the adjustable steering column and a pin-like holding element (3) is mounted on the body so as to be displaceable in its longitudinal direction and is inserted between the balls or the like.

## Revendications

1. Dispositif pour la fixation de deux pièces (1, 2), mobiles l'une par rapport l'une à l'autre, au moyen d'au moins un élément de maintien (3), qui est associé à la première pièce (1) et s'engage dans la deuxième pièce (2), transversalement par rapport à la direction de déplacement des deux pièces (1, 2), **caractérisé en ce que** la première pièce (1) est reliée fixement à la carrosserie d'un véhicule automobile et que la deuxième pièce (2) est reliée fixement à une colonne de direction réglable du véhicule automobile, et **en ce que** la deuxième pièce (2) comprend au moins un récipient (7), rempli d'une matière (8) granulée, de préférence en forme de billes, et que l'élément de maintien (3) est noyé dans la matière (8).

2. Dispositif selon la revendication 1, **caractérisé en ce que** l'élément de maintien (3) est en saillie d'une plaque (6), qui forme un couvercle déplaçable pour le récipient (7).

3. Dispositif selon revendication 1 ou 2, **caractérisé en ce que** l'élément de maintien (3) est monté dans la première pièce (1) en pouvant être déplacé transversalement par rapport à la direction de déplacement des deux pièces (1, 2) et retiré hors de la matière (8).

4. Dispositif selon l'une des revendications 1 à 3, **caractérisé en ce que** l'élément de maintien (3) est monté en rotation dans la première pièce.

5. Dispositif selon l'une des revendications 1 à 4, **caractérisé en ce que** la section transversale de l'élément de maintien (3) présente la forme d'une étoile ou d'une croix.

6. Dispositif selon l'une des revendications 1 à 5, **caractérisé en ce que** l'extrémité de l'élément de maintien (3), noyée dans la matière (8), se termine en une pointe.

7. Dispositif selon la revendication 1, **caractérisé en ce qu'**un récipient (7) rempli de billes ou analogue est monté sur la colonne de direction réglable, et qu'un élément de maintien (3) en forme de tige, ajustable dans sa direction longitudinale, glissé entre les billes ou un produit analogue, est monté sur la carrosserie.
